# EUROPÄISCHE PATENTSCHRIFT

(11) **EP 1 513 781 B1**
(45) Veröffentlichungstag und Bekanntmachung des Hinweises auf die Patenterteilung: **17.05.2006**
(21) Anmeldenummer: 03759844.8
(22) Anmeldetag: 10.06.2003
(51) Int. Cl.: C04B 35/495, C23C 4/10, F16L 59/00, F01D 5/28

(54) **WÄRMEDÄMMSCHICHT AUS EINEM KOMPLEXEN PEROWSKIT**
HEAT-INSULATING LAYER MADE OF COMPLEX PEROVSKITE
COUCHE D'ISOLATION THERMIQUE CONSTITUEE D'UNE PEROVSKITE COMPLEXE

(30) Priorität: 13.06.2002 DE 10226295
(43) Veröffentlichungstag der Anmeldung: 16.03.2005
(73) Patentinhaber: Forschungszentrum Jülich GmbH, 52425 Jülich (DE)
(72) Erfinder: VASSEN, Robert, 52134 Herzogenrath (DE); SCHWARTZ-LÜCKGE, Sigrid, 52525 Heinsberg-Randerath (DE); JUNGEN, Wolfgang, 52249 Eschweiler (DE); STÖVER, Detlev, 52382 Niederzier (DE)
(86) Internationale Anmeldenummer: PCT/DE2003/001924
(87) Internationale Veröffentlichungsnummer: WO 2003/106372

(56) Entgegenhaltungen:
- EP-A- 0 252 668
- EP-A- 0 275 151
- EP-A- 0 838 446
- DE-A- 10 056 617
- US-A- 4 752 594
- US-A- 6 017 504
- US-B1- 6 319 614
- BHALLA A S ET AL: "The perovskite structure-a review of its role in ceramic science and technology" MATERIALS RESEARCH INNOVATIONS, NOV. 2000, SPRINGER-VERLAG, GERMANY, Bd. 4, Nr. 1, Seiten 3-26, XP002255214 ISSN: 1432-8917 in der Anmeldung erwähnt

## Beschreibung

Die Erfindung betrifft eine Wärmedämmschicht, die aus einem komplexen Perowskiten aufgebaut ist.

### Stand der Technik

Zur Erhöhung des Wirkungsgrades stationärer und fliegender Gasturbinen werden heute immer höhere Gastemperaturen in diesen Maschinen angestrebt. Hierzu werden Bauteile der Turbinen mit Wärmedämmschichten (WDS) versehen, die in der Regel aus Yttrium stabilisiertem Zirkonoxid (YSZ) bestehen. Eine Haftvermittlerschicht (HVS) aus einer MCrAlY-Legierung (M = Co, Ni) oder einer Aluminidschicht zwischen dem Substrat und der Wärmedämmschicht dient hauptsächlich dem Oxidationsschutz des Substrates. Mit diesen Systemen können heute Öberflächentemperaturen der Turbinenbauelemente bis zu 1200°C realisiert werden.

Eine weitere Erhöhung auf über 1300°C wird angestrebt, ist jedoch mit den gängigen Werkstoffen, insbesondere mit YSZ nicht realisierbar ist. Das über Plasmaspritzen oder Elektronenstrahlverdampfung abgeschiedene Zirkonoxid unterliegt bei Temperaturen über 1200°C einer Phasenumwandlung sowie beschleunigten Sintervorgängen, die innerhalb der Betriebszeit zu einer Schädigung der Schicht führt. Bei gleicher Wärmeleitfähigkeit der Wärmedämmschicht und gleicher Schichtdicke führen höheren Oberflächentemperaturen auch zu höheren Temperaturen in der Haftvermittlerschicht und dem Substrat. Diese Temperatursteigerung führt ebenfalls zu einer beschleunigten Schädigung des Werkstoffverbundes.

Aus diesen Gründen wird weltweit nach neuen Materialien gesucht, die das teilstabilisierte Zirkonoxid als Material für eine Wärmedämmschicht ablösen könnten.

Aus DE 100 56 617 A1 ist bekannt, Selten-Erden Perowskite mit La, Ce, Pr, oder Nd auf der A-Position und Er, Tm, Yb oder Lü auf der B-Position als Materialien für Wärmedämmschichten einzusetzen. Sie zeichnen sich durch eine hohe Schmelztemperatur aus, die je nach Material oberhalb von 1800°C, insbesondere sogar oberhalb von 2000°C liegen. Bis zu dem Bereich, indem der Werkstoff seine Schmelztemperatur erreicht, zeigt ein solcher Werkstoff keine Phasenumwandlung und kann damit für entsprechende Zwecke, insbesondere als Wärmedämmschicht, eingesetzt werden. Eine weitere Eigenschaft dieser vorgenannten Perowskite ist deren thermischen Ausdehnungskoeffizienten von typischerweise mehr als 8,5 * 10⁻⁶ K⁻¹. Ferner ist auch eine geringe Wärmeleitfähigkeit von weniger als 2,2 W/mK für den Einsatz als Wärmedämmschicht vorteilhaft.
Peröwskite mit diesen Eigenschaften eignen sich besonders gut als Wärmedämmschicht auf einem metallischen Substrat, da der angepaßte thermische Ausdehnungskoeffizient mechanische Spannungen zwischen den beiden Materialien bei Temperaturerhöhung verringert und die geringe Wärmeleitfähigkeit ein Überhitzen des Substrates regelmäßig verhindert.
Weiterhin ist eine komplexe Perowskitfamilie mit der allgemeinen Form A²⁺(B²_{1/3}⁺B⁵⁺_{2/3})O₃ bekannt, die aufgrund ihrer Temperaturen ausgleichenden Wirkung und als verlustarme Dielektrika Verwendung in vielen drahtlosen Kommunikationsvorrichtungen finden (L. Dupont, L.Chai, P.K.Davies:"A- and B-site order in (Na_{1/2}La_{1/2}) (Mg_{1/3}Ta_{2/3})O₃ perowskites"; A.S. Bhalla, R. Guo, R. Roy, "The perowskite structure - a review of its role in ceramic science and technology", Mat. Res. Innovat. (2000) Vol. 4., 3-26).

### Aufgabe und Lösung

Aufgabe der Erfindung ist es, einen Wärmedämmstoff für eine Wärmedämmschicht zur Verfügung zu stellen, welche die Anförderungen an eine niedrige Wärmeleitfähigkeit, einen hohen thermischen Ausdehnungskoeffizienten, eine hohe Sintertemperatur gleichzeitig eine gute Phasenstabilität bis zu Temperaturen über 1300°C erfüllt. Weiterhin ist es Aufgabe der Erfindung thermisch beanspruchte Bauteile mit einer solchen Wärmedämmschicht zur Verfügung zu stellen.

Die Aufgabe wird gelöst durch einen Wärmedämmstoff für eine Wärmeschutzschicht mit der Gesamtheit der Merkmale des Hauptanspruchs sowie durch die Verwendung dieses Wärmedämmstoffs als Wärmedämmschichten auf der Oberfläche von Bauteilen gemäß Nebenanspruch. Vorteilhafte Ausführungsformen ergeben sich aus den jeweils darauf rückbezogenen Ansprüchen.

### Gegenstand der Erfindung

Gegenstand der Erfindung ist eine Wärmeschutzschicht aus einem Wärmedämmstoff mit einer komplexen Perowskitstruktur, mit einem Schmelzpunkt oberhalb von 2500°C, mit einem thermischen Ausdehnungskoeffizieneten von mehr als 8*10⁻⁶ K⁻¹ sowie mit einer Sintertemperatur von mehr als 1400°C. Dieser Wärmedämmstoff zeichnet sich darüber hinaus durch eine komplexe Perowskit-Struktur aus, die sich durch die folgende allgemeinen Formel darstellen läßt: A₁₊ᵣ (B'_{1/3+x}B''_{2/3+y}) O_{3+z}

Dabei bedeutet A wenigstens ein Element der Gruppe (Ba, Sr, Ca, Be), B' wenigstens ein Element der Gruppe (Mg, Ba, Sr, Ca, Be) und B'' wenigstens ein Element der Gruppe (Ta, Nb). Alternativ kann der Wärmedämmstoff auch eine Zusammensetzung gemäß der folgenden Formel aufweisen: A₁₊ᵣ (B'_{1/2+x}B''_{1/2+y})O_{3+z}.

In diesem Fall kann für A wenigstens ein Element der Gruppe (Ba, Sr, Ca, Be), für B' wenigstens ein Element der Gruppe (Al, La, Nd, Gd, Er, Lu, Dy, Tb) und für B'' wenigstens ein Element der Gruppe (Ta, Nb) gewählt werden. Für beide Vorgenannten Zusammensetzungen sollen im Rahmen dieser Erfindung auch soche Verbindungen mitumfasst sein, die eine leichte Abweichung von der Stöchiometrie zeigten, d. h. es soll gelten -0,1 < r, x, y, z < 0,1.

Es wurde gefunden, dass im Unterschied zu vielen anderen Materialien aus der Klasse der Perowskite diese vorgenannten Wärmedämmstoffe in geordneter Form eine Lagen-Struktur ausbilden, in der sich Lagen von B' und B'' Atomen entsprechend der Stöchiometrie abwechseln. Auch drei öder mehr Atome auf den B-Plätzen sind bei ungefährer Einhaltung der Stöchiometrie möglich, ebenso eine Mischung der Atome auf den A-Plätzen. Eine gewisse Abweichung von der Stöchiometrie im Bereich bis 5 % ist tolerierbar.
Ebenso sind Zusätze im Bereich von einigen, wenigen Prozenten von solchen Fremdkationen möglich, die nicht zu stark im Ionenradius von den ursprünglichen Kationen abweichen.
Die Wärmedämmstoffe besitzen vorteilhaft einen hohen Ausdehnungskoeffizienten von mehr als 8*10⁻⁶/K und eine geringe Sinterneigung. Typische Sintertemperaturen dieser Stoffe liegen regelmäßig oberhalb von 1400°C.
Alle Wärmedämmstoffe weisen eine hohe Phasenstabilität bis oberhalb von 1350 °C auf. Die thermische Leitfähigkeit dieser Perowskite ist für den Einsatz als Wärmedämmstoff ebenfalls sehr günstig, da sie mit weniger als 3 W/m/K besonders niedrig ausfällt.
Ferner liegen die Schmelzpunkte dieser erfindungsgemäßen Wärmedämmstoffe regelmäßig oberhalb von 2000°C, teilweise auch oberhalb von 2500 °C. Zusätzlich tritt bei dieser Klasse noch eine mittlere bis große Differenz zwischen den Kationenmassen auf, was zusätzlich die thermische Leitfähigkeit verringert.
All diese Eigenschaften lassen die vorgenanten Materialien für die Anwendung als Wärmedämmschicht-Material sehr geeignet erscheinen.

Ein besonders vorteilhafter Vertreter aus der Gruppe der vorgenannten Wärmedämmstoffe ist Ba (Mg_{1/3}Ta_{2/3})O₃. Däneben sind auch Sr(Al_{1/2}Ta_{1/2})O₃, Ca(Al_{1/2}Nb_{1/2})O₃, Sr(Sr_{1/2}Ta_{2/3})O₃ oder auch Sr(La_{1/2}Ta_{1/2})O₃ als besonders vorteilhaft zu nennen. Eine aus diesen Materialien aufgebaute Wärmeschutzschicht weist in der Regel einen Schmelzpunkt von etwa 3000 °C und eine nur sehr geringe Sinterneigung auf.

### Spezieller Beschreibungsteil

Nachfolgend wird der Gegenstand der Erfindung anhand von Ausführungsbeispielen und einer Figur näher erläutert, ohne daß der Gegenstand der Erfindung dadurch beschränkt wird.

### 1. Eigenschaften des Wärmedämmstoffes

Eine besonders geeignete Wärmedämmschicht aus dem vorteilhaften Wärmedämmstoff mit der Zusammensetzung Ba(Mg_{1/3}Ta_{2/3})O₃ wurde zunächst durch eine Festkörperreaktion aus BaCO₃, MgO und Ta₂O₅ hergestellt. Nach dem Pressen wurde das Material bei 1600°C für mehrere Stunden gesintert, ohne dass eine merkliche Sinterschrumpfung eintrat. Dies bestätigt die für die Anwendung als Wärmedämmschicht erforderliche geringe Sinterneigung dieses Materials.
Analog kann Sr(Al_{1/2}Ta_{1/2})O₃ oder Cä (Al_{1/2}Ta_{1/2})O₃ aus Al₂O₃ und Ta₂O₅ und SrCO₃ bzw. CaCO₃ hergestellt werden. Allgemein gilt, dass die Elemente Barium, Strontium und Calcium vorteilhaft als Carbonate und die übrigen Elemente vorteilhaft als Oxide in einer Mischung vorgelegt werden. Die Mengen der einzelnen Verbindungen werden entsprechend der vorgenannten stöchiometrischen Zusammensetzung ausgewählt. Durch eine Festkörperreaktion entstehen dann die gewünschten Perowskite. Auch Zusammensetzungen mit einer leichten Abweichung von der Stöchiometrie, wie sie vormals genannt würden, können durch geeignete Wälzl der Äusgangsmengen erzielt werden.

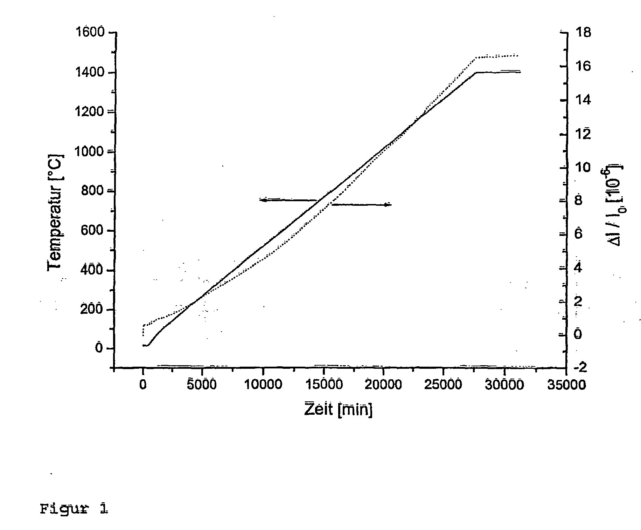

Mit dem so hergestellten Ba(Mg_{1/3}Ta_{2/3})O₃ wurde ein Dilatometerversuch durchgeführt. Die Figur zeigt das Ergebnis für dieses Material. Der Wärmedämmstoff weist eine thermische Ausdehnung bei 1000 °C von 10, 4 *10⁻⁶/K. Dieser Wert ist vergleichbar mit dem Standardmaterial YSZ und demnach ebenfalls sehr günstig für eine Anwendung als Wärmedämmschicht.

### 2. Herstellung eines Wärmedämmschichtsystems (WDS)

Der unter Punkt 1. über die Festkörperreaktion hergestellte Wärmedämmstoff mit der Zusammensetzung Ba(Mg_{1/3}Ta_{2/3})O₃ kann weiter über die Sprühtrocknung granuliert und anschließend über thermische Spritzverfahren wie das atmosphärische Plasmaspritzen (APS) zu einem WDS-System verarbeitet werden. Dazu werden Nickel- oder Kobaltbasislegierungen über (Vakuum-) Plasmaspritzen zunächst mit einer MCrAlY (M = Co, Ni) Haftvermittlerschicht versehen (Dicke der Schicht ca. 50 - 500 µm). Anschließend wird über atmosphärisches Plasmaspritzen (APS) die Wärmedämmschicht aus dem erfindungsgemäßen Material in einer Schichtdicke von ca. 50 - 3000 µm aufgebracht. Alternativ kann man auch eine Zweilagen-Wärmedämmschicht herstellen, indem zuerst eine Lage aus dem Standard-WDS Werkstoff YSZ aufgebracht wird und als oberste Lage der erfindungsgemäße Wärmedämmstoff, z. B. Ba(Mg_{1/3}Ta_{2/3})O₃ (BMT) abgeschieden wird.

### Liste der verwendeten Abkürzungen:

- WDS =: Wärmedämmschicht
- YSZ =: Yttrium teil stabilisiertes Zirkonoxid
- APS =: atmosphärisches Plasmaspritzen
- PVD =: (physical vapor deposition) = physikalische Vakuumabscheidung
- BMT =: Ba(Mg, Ta)O₃

## Patentansprüche

1. Schichtsystem umfassend ein Bauteil und ein auf der Oberfläche des Bauteils angeordneten Wärmedämmschicht, wobei die Wärmedämmschicht einen Schmelzpunkt oberhalb von 2500°C, einen thermischen Ausdehnungskoeffizienten von mehr als 8*10⁻⁶ K⁻¹ und eine Sintertemperatur von mehr als 1400°C aufweist, **dadurch gekennzeichnet,**
- **dass** die Wärmedämmschicht eine Perowskitstruktur der allgemeinen Formel A₁₊ᵣ (B'_{1/3+x}B''_{2/3+y}) O_{3+z} aufweist, wobei gilt:
A = wenigstens ein Element der Gruppe (Ba, Sr, Ca, Be),
B' = wenigstens ein Element der Gruppe (Mg, Ca, Sr, Ba, Be),
B'' = wenigstens ein Element der Gruppe (Ta, Nb) und -0,1 < r, x, y, z < 0,1 ;
- oder dass die Wärmedämmschicht eine Perowskitstruktur der allgemeinen Formel A₁₊ᵣ (B'_{1/2+x}B''_{1/2+y}) O_{3+z} aufweist,
wobei gilt:
A = wenigstens ein Element der Gruppe (Ba, Sr, Ca, Be),
B' = wenigstens ein Element der Gruppe (Al, La, Nd, Gd, Er, Lu, Dy, Tb),
B'' = wenigstens ein Element der Gruppe (Ta, Nb) und -0,1 < r, x, y, z < 0,1.

2. Schichtsystem nach Anspruch 1, bei dem die Wärmedämmschicht eine Zusammensetzung mit r = x = y = z = 0 aufweist.

3. Schichtsystem nach einem der vorhergehenden Ansprüche 1 bis 2 mit der Zusammensetzung der Wärmedämmschicht gemäß der Formel Ba(Mg_{1/3}Ta_{2/3})O₃,.

4. Schichtsystem nach einem der Ansprüche 1 bis 3, bei dem zwischen dem Bauteil und der Wärmedämmschicht eine oder mehrere Zwischenschichten aus keramischen, glasigen oder metallischen Werkstoffen angeordnet sind.

5. Schichtsystem nach vorhergehendem Anspruch 4, bei der zwischen dem Bauteil und der Wärmedämmschicht eine MCrAlY-Legierung mit M = Co, Ni als Material für die Zwischenschicht angeordnet ist.

6. Schichtsystem nach einem der vorhergehenden Ansprüche 4 bis 5, bei der zwischen dem Bauteil und der Wärmedämmschicht eine (Platin-)Aluminidschicht als Material für eine Zwischenschicht angeordnet ist.

7. Verfahren zur Herstellung eines Schichtsysteme nach einem der Ansprüche 1 bis 6, mit den Schritten
- die Ausgangsmaterialien der Wärmedämmschicht werden als Carbonate und/oder Oxide entsprechend der vorgenannten Stöchiometrie als Mischung vorgelegt,
- diese Mischung wird einer Festkörperreaktion unterzogen, wobei der erzeugte Wärmedämmstoff die entsprechende Stöchiometrie und die Perowskitstruktur aufweist,
- der so hergestellte Wärmedämmstoff wird auf die Oberfläche des Bauteils aufgebracht.

8. Verfahren nach Anspruch 7, **dadurch gekennzeichnet, dass** die Mischung für die Wärmedämmschicht derart hergestellt wird, dass der Perowskit nach der Festkörperreaktion eine Zusammensetzung gemäß der Formel A₁₊ᵣ (B'_{1/3+x}B''_{2/3+y}) O_{3+z} oder gemäß der Formel A₁₊ᵣ (B'_{1/2+x}B''_{1/2+y}) O_{3+z} aufweist, wobei -0,1 < r, x, y, z < 0,1 ist.

9. Verfahren nach Anspruch 7 oder 8, **dadurch gekennzeichnet, dass** die Mischung für den Wärmedämmstoff derart hergestellt wird, dass der Perowskit nach der Festkörperreaktion eine Zusammensetzung gemäß der Formel
A₁ (B'_{1/3}B''_{2/3}) O₃ oder gemäß der Formel
A₁ (B'_{1/2}B''_{1/2}) O₃ aufweist.

## Claims

1. Layer system comprising a component and a heat insulating layer arranged on the surface of the component, in which the heat insulating layer has a melting point above 2500° C, a thermal expansion coefficient of more than 8*10⁻⁶ K⁻¹ and a sintering temperature of more than 1400° C, **characterised in that**
- the heat insulating layer has a perovskite structure of the general formula A₁₊ᵣ(B'_{1/3+x} B"_{2/3+y}) O_{3+z}, in which:
A = at least one element of the group (Ba, Sr, Ca, Be),
B' = at least one element of the group (Mg, Ca, Sr, Ba, Be),
B" = at least one element of the group (Ta, Nb) and - 0.1 < r, x, y, z < 0.1;
- or the heat insulating layer has a perovksite structure of the general formula A₁₊ᵣ (B'_{1/2+x}B"_{1/2+y}) O_{3+z}, in which:
A = at least one element of the group (Ba, Sr, Ca, Be),
B' = at least one element of the group (Al, La, Nd, Gd, Er, Lu, Dy, Tb),
B" = at least one element of the group (Ta, Nb) and -0.1< r, x, y, z < 0.1.

2. Layer system according to claim 1, in which the heat insulating layer has a composition with r=x=y=z=0.

3. Layer system according to one of the previous claims 1 to 2 with the composition of the heat insulating layer according to the formula Ba(Mg_{1/3}Ta_{2/3})O₃,

4. Layer system according to one of claims 1 to 3, in which one or several intermediate layers made of ceramic, glass or metal materials are arranged between the component and the heat insulating layer.

5. Layer system according to the previous claim 4, in which a MCrAlY alloy with M = Co, Ni as material for the intermediate layer is arranged between the component and the heat insulating layer.

6. Layer system according to one of the previous claims 4 to 5, in which a (platinum) aluminide layer as material for an intermediate layer is arranged between the component and the heat insulating layer.

7. Method for producing a layer system according to one of claims 1 to 6, with the steps
- the initial materials of the heat insulating layer are present as carbonates and/or oxides according to the stoichiometry indicated above as a mixture,
- this mixture is subject to a solid reaction, in which the heat insulating material produced has the relevant stoichiometry and perovskite structure,
- the heat insulating material produced in this way is applied to the surface of the component.

8. Method according to claim 7, **characterised in that** the mixture for the heat insulating layer is made in such a way that after the solid reaction the perovskite has a composition according to the formula
A₁₊ᵣ (B'_{1/3+x}B"_{2/3+y}) O_{3+z} or according to the formula
A₁₊ᵣ (B'_{1/2+x}B"_{1/2+y}) O_{3+z}, in which
-0.1 < r, x, y, z < 0.1.

9. Method according to claim 7 or 8, **characterised in that** the mixture for the heat insulating material is produced in such a way that after the solid reaction the perovskite has a composition according to the formula
A₁ (B'_{1/3} B"_{2/3}) O₃ or according to the formula
A₁ (B'_{1/2} B"_{1/2}) O₃.

## Revendications

1. Système stratifié comprenant un élément et une couche calorifuge disposée sur la surface de l'élément, la couche calorifuge ayant un point de fusion supérieur à 2500°C, un coefficient de dilatation thermique de plus de 8*10⁻⁶ K⁻¹ et une température de frittage de plus de 1400°C, **caractérisé**
- **en ce que** la couche calorifuge a une structure de perovskite de formule générale A₁₊ᵣ (B'_{1/3+x}B''_{2/3+y}) O_{3+z}, dans laquelle :
A = au moins un élément du groupe (Ba, Sr, Ca, Be),
B' = au moins un élément du groupe (Mg, Ca, Sr, Ba, Be),
B'' = au moins un élément du groupe (Ta, Nb) et -0,1 < r, x, y, z < 0, 1 ;
- ou en ce que la couche calorifuge a une structure de perovskite de formule générale A₁₊ᵣ (B'_{1/2+x}B''_{1/2+y}) O_{3+z}, dans laquelle :
A = au moins un élément du groupe (Ba, Sr, Ca, Be),
B' = au moins un élément du groupe (Al, La, Nd, Gd, Er, Lu, Dy, Tb),
B'' = au moins un élément du groupe (Ta, Nb) et -0,1 < r, x, y, z < 0,1.

2. Système stratifié suivant la revendication 1, dans lequel la couche calorifuge a une composition avec r = x = y = z = 0.

3. Système stratifié suivant l'une des revendications 1 à 2 précédentes, ayant la composition de la couche calorifuge suivant la formule Ba (Mg_{1/3}Ta_{2/3})O₃.

4. Système stratifié suivant l'une des revendications 1 à 3, dans lequel il est interposé entre l'élément et la couche calorifuge une ou plusieurs couches intermédiaires en matériau céramique, vitreux ou métallique.

5. Système stratifié suivant la revendication 4 précédente, dans lequel il est interposé entre l'élément et la couche calorifuge un alliage en MCrAlY avec M = Co et Ni comme matériau pour la couche intermédiaire.

6. Système stratifié suivant l'une des revendications 4 à 5 précédentes, dans lequel il est interposé entre l'élément et la couche calorifuge une couche d'aluminure de platine comme matériau pour une couche intermédiaire.

7. Procédé de production d'un système stratifié suivant l'une des revendications 1 à 6, comprenant les stades dans lesquels :
- les matières premières de la couche calorifuge se présentent sous la forme d'un mélange sous forme de carbonates et/ou d'oxydes correspondant à la stoechiométrie mentionnée précédemment,
- ce mélange est soumis à une réaction entre solides, la substance calorifuge produite ayant la stoechiométrie correspondante et la structure de perovskite,
- on dépose la matière calorifuge produite sur la surface de l'élément.

8. Procédé suivant la revendication 7, **caractérisé en ce que** l'on prépare le mélange pour la couche calorifuge de façon à ce que la perovskite ait, après la réaction de solides, une composition suivant la formule
A₁₊ᵣ (B'_{1/3+x}B''_{2/3+y}) O_{3+z} ou suivant la formule
A₁₊ᵣ (B'_{1/2+x}B''_{1/2+y}) O_{3+z}, dans lesquelles
-0, 1 < r, x, y, z < 0, 1.

9. Procédé suivant la revendication 7 ou 8, **caractérisé en ce que** l'on prépare le mélange pour la matière calorifuge de façon à ce que la perovskite ait, après la réaction de corps solides, une composition suivant la formule
A₁ (B'_{1/3}B''_{2/3}) O₃ ou suivant la formule
A₁ (B'_{1/2}B"_{1/2}) O₃.
